# EUROPÄISCHE PATENTSCHRIFT

(11) **EP 3 581 256 B1**
(45) Veröffentlichungstag und Bekanntmachung des Hinweises auf die Patenterteilung: **14.04.2021**
(21) Anmeldenummer: 19187691.1
(22) Anmeldetag: 15.05.2013
(51) Int. Cl.: B01D 46/00, B01D 46/52, B01D 46/10

(54) **INNENRAUMFILTER UND FILTERELEMENT FÜR EINEN INNENRAUMFILTER**
INDOOR FILTER AND FILTER ELEMENT FOR AN INDOOR FILTER
FILTRE D'HABITACLE ET ÉLÉMENT FILTRANT POUR UN FILTRE D'HABITACLE

(30) Priorität: 15.05.2012 DE 102012009595
(43) Veröffentlichungstag der Anmeldung: 18.12.2019
(62) Teilanmeldung aus: 13730126.3
(73) Patentinhaber: Mann+Hummel GmbH, 71636 Ludwigsburg (DE)
(72) Erfinder: Bayerlein, Tina, 95326 Kulmbach (DE); Pekny, Peter, 95339 Neuenmarkt (DE); Rieß, Elmar, 95482 Gefrees (DE); Atilgan, Emrullah, 95460 Bad Berneck (DE)
(74) Vertreter: Mann + Hummel Intellectual Property

(56) Entgegenhaltungen:
- EP-A1- 1 254 694
- EP-A1- 1 504 803
- EP-A1- 1 616 736
- EP-A2- 1 172 240
- DE-A1- 10 231 696
- DE-A1-102009 059 782

## Beschreibung

### Technisches Gebiet

Die Erfindung betrifft einen Luftfilter, insbesondere einen Innenraumfilter, z. B. für ein Kraftfahrzeug, insbesondere in einer Klimaanlage sowie eine Verwendung eines Filterelements in einen solchen Filter.

### Stand der Technik

Aus der DE 10 2005 048 841 ist ein Innenraumfilter bekannt, bei dem eine Filterelementaufnahme einen Führungszapfen besitzt, der in einen Führungsschacht in einem Filterelement eintaucht, wenn das Filterelement entlang seiner Längsachse in die Filterelementaufnahme eingesteckt wird. Andere Innenraumfilter sind bekannt, bei denen Formgebungen auf einer Filterelementaufnahme komplementäre Formgebungen des Filterelements benötigen, damit das Filterelement beim Einschieben in die Filterelementaufnahme mit dieser dichtend abschließen kann.

Aus der DE 102 31 696 A1 ist ein Filtereinsatz bekannt, der eine Endkappe besitzt, die in einer Ausführungsform T-förmig gestaltet ist, sodass ein Steg in der Ebene des Filterelements vom Filterelement absteht.

Aus der DE 20 2005 011 078 U1 ist ein Filterelement bekannt, das einen Abdichtstreifen umfasst, der z. B. dreiseitig um das Filterelement herum angebracht ist

Nachteilig bei derartigen Filtern ist, dass das Filterelement jeweils genau für den entsprechenden Filter angepasst sein muss. Z. B. muss ein Filtereinsatz für einen Innenraumfilter der DE 10 2005 048 841 seine Führungsaufnahmen genau an den Positionen der Führungszapfen aufweisen. Der Abdichtstreifen der DE 20 2005 011 078 U1 kann zwar geringe Unebenheiten ausgleichen, hat aber z. B. eine in sich gleichbleibende Dicke, gleiches gilt für den Steg der DE 102 31 696 A1. Wünschenswert wären Lösungen, bei denen ein Filterelement für unterschiedliche Konfigurationen der Filterelementaufnahme geeignet ist oder leichter anpassbar ist.

Aus der DE 10 2009 059 782 A1 ist ein Filterelement bekannt, das an einer seiner Stirnwände einen Codierschuh in Form eines hohlen dünnwandigen Bauteils aufweist.

### Offenbarung der Erfindung

Innenraumfilter umfassend eine Filterelementaufnahme und ein Filterelement umfassend einen Faltenpack. Das Filterelement kann entlang einer Einschubrichtung in die Filterelementaufnahme eingeschoben werden oder in dieser verschoben werden. Das Filterelement umfasst ein Schwert, das sich in Einschubrichtung oder Verschiebungsrichtung vom Filterelement aus erstreckt. Bevorzugt ist das Schwert dabei so eigenstabil, dass es Druckkräfte vom Filterelement auf die Filterelementaufnahme übertragen kann, die zu einer Abdichtung des Filterelements in der Filteraufnahme führen können.

Das Filterelement kann Seitenbänder umfassen, die den Faltenpack auf mindestens zwei Seiten abschließen. Bevorzugt sind die Seitenbänder aus Vliesmaterial gefertigt.

Das Filterelement kann einen kunststoffumspritzten Faltenpack umfassen. Hierdurch wird ein Kunststoffrahmen für das Filterelement gebildet.

Das Schwert kann geneigt zur Ebene des Faltenpacks ausgebildet sein. Damit können z. B. in unterschiedlichen Höhen auf den Seiten des Filterelements angebrachte Dichtungen auf der in Einschubrichtung liegenden Seite verbunden werden.

Bevorzugt hat das Schwert eine Länge von mehr als 2 cm in Richtung der Einschub- oder Verschiebungsrichtung.

Das Schwert hat in der Filterelementebene eine von der rechteckigen Form abweichende Form, nämlich eine asymmetrische Form. Das Schwert ist an eine Kontur asymmetrische und/oder nichtrechteckige Kontur eines Gehäuses angepasst.

Gelöst wird die Aufgabe durch ein Filterelement für einen Innenraumfilter mit den dargestellten Merkmalen für insbesondere das Schwert.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Es zeigen
Figur 1 ein Filterelement für einen Innenraumfilter mit einem Schwert in Längsrichtung des Filterelements, wobei das Schwert als Kunststoffteil am Filterelement angebracht ist (nicht erfindungsgemäß);
Figur 2 ein Filterelement für einen Innenraumfilter mit einem Schwert in Längsrichtung des Filterelements, wobei das Schwert aus dem Filtermedium des Faltenpacks des Filterelements gefertigt ist (nicht erfindungsgemäß);
Figur 3 ein Filterelement für einen Innenraumfilter mit einem Schwert in Längsrichtung des Filterelements, wobei das Schwert aus Schaumstoff gefertigt ist;
Figur 4 a) und b) sowie Figur 5 a) und b)
   alternative Gestaltungsformen eines Filterelements für einen Innenraumfilter, die eine einfache Anpassung an Geometrien einer Filterelementaufnahme ermöglichen (nicht erfindungsgemäß).

In den Figuren sind gleiche Bauteile mit gleichen Bezugszeichen versehen.

### Ausführungsform(en) der Erfindung

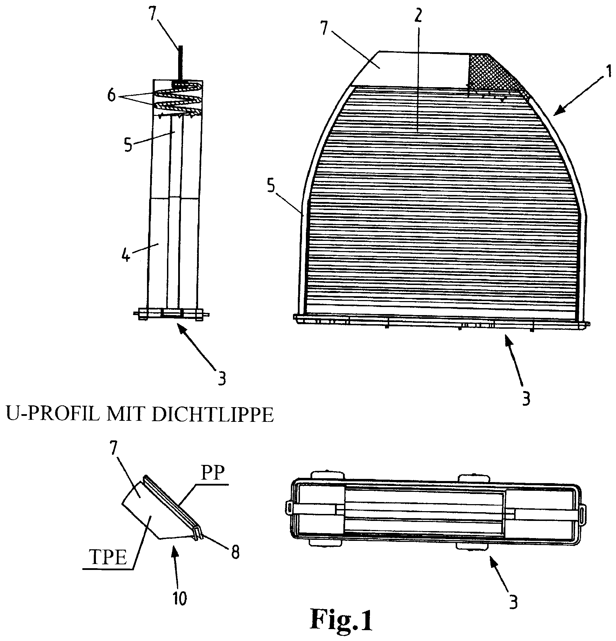

Figur 1 zeigt ein Filterelement 1 für einen Innenraumfilter mit einem Schwert 7 in Längsrichtung des Filterelements 1, wobei das Schwert 7 als Kunststoffteil 10 am Filterelement 1 angebracht ist. Das Filterelement 1 umfasst einen Faltenpack 2, der sich in Einschubrichtung des Filterelements verjüngt. Eine Seite des Filterelements 1 ist mit einer Frontplatte 3 versehen, die im eingebauten Zustand den Abschluss nach außen darstellt und eine Filterelementaufnahme verschließt. Der Faltenpack umfasst eine Vielzahl von Falten 6 eines Filtermediums. Als Filtermedium kann Papier oder Vlies dienen, das Filtermedium kann Adsorbentien, z. B. Aktivkohle, umfassen. Der Faltenpack 2 ist an den Stirnkanten mit Seitenbändern 4 versehen, die die Falten abschließen, ggf. einen Abschluss und eine Versiegelung des Filtermediums darstellen, wenn dieses z. B. Aktivkohle enthält. Die Seitenbänder 4 können z. B. aus Vlies gefertigt sein. Auf den beiden Seitenbändern 4 ist eine Dichtung 5 aufgebracht, z. B. ein Schaumstoffband, das die seitliche Abdichtung des Filterelements 1 in der Filterelementaufnahme realisiert. Die Abdichtung der in Einschubrichtung hinteren Seite des Filterelements 1 wird durch ein Schwert 7 realisiert. Das Schwert ist Teil eines Kunststoffteils 10 und kann mit einem U-förmigen Bereich am Filterelement 1 befestigt sein. Die letzte Falte 6 des Faltenpacks 2 kann in den U-förmigen Bereich eingesteckt oder verklebt sein. Das Kunststoffteil 10 kann mit den Seitenbändern 4 verbunden sein, z. B. verklebt oder verschweißt. In einer alternativen Bauform könnte der Faltenpack 2 auch mit Kunststoff umspritzt sein, wobei dadurch die Seitenbänder ersetzt werden könnten und das Kunststoffteil 10 ebenfalls, z. B. auch materialeinheitlich, mit dem so dargestellten Rahmen verbunden sein könnte. Das Schwert 7 kann in allen Varianten aus einem elastischen Kunststoff oder einer Kombination von elastischen und weniger elastischen Kunststoffen gefertigt werden. Insbesondere kann das Schwert im 2K-Verfahren aus zwei unterschiedlichen Kunststoffen gefertigt werden oder aus einem oder mehreren thermoplastischen Elastomeren. Durch ein solches Schwert 7 wird die Filterfläche verringert, allerdings ist insbesondere bei einer Form des Faltenpacks 2 wie in Figur 1 die Verringerung in einem Bereich des Faltenpacks, der eine geringere Breite aufweist und am Rand eventuell eine geringere Durchströmung hat. Für unterschiedliche Formgebungen auf der Seite der Filterelementaufnahme kann dann ein Filterelement 1, bei dem lediglich das Kunststoffteil 10 geändert werden muss, verwendet werden. Dem Nachteil der verringerten Filterfläche steht also ein Vorteil auf der Fertigungsseite gegenüber.

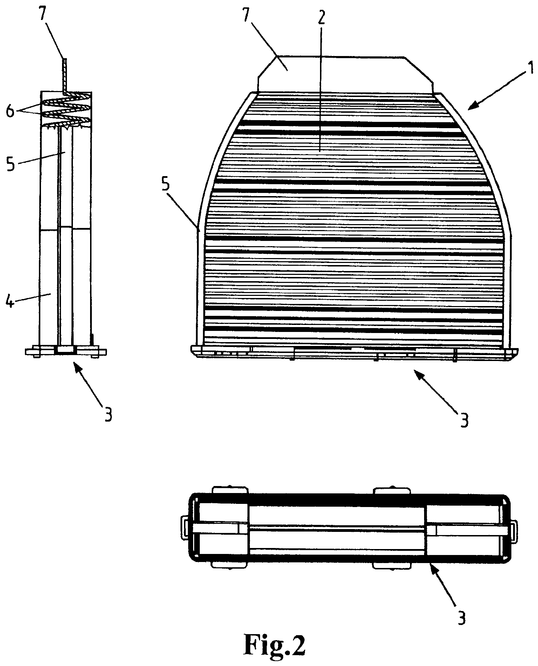

Figur 2 zeigt ein Filterelement 1 für einen Innenraumfilter mit einem Schwert 7 in Längsrichtung des Filterelements 1, wobei das Schwert 7 aus dem Filtermedium des Faltenpacks 6 des Filterelements gefertigt ist. Hierdurch kann im Unterschied zur Variante der Figur 1 das Schwert 7 aus dem Filtermedium selber realisiert werden und auf ein Zusatzbauteil verzichtet werden.

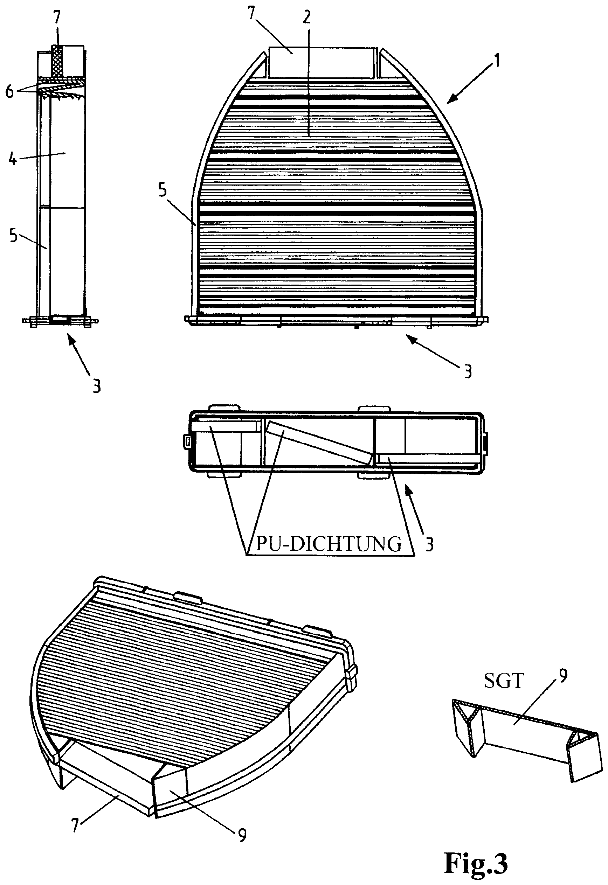

Figur 3 zeigt ein Filterelement 1 für einen Innenraumfilter mit einem Schwert 7 in Längsrichtung des Filterelements, wobei das Schwert aus Schaumstoff gefertigt ist. Unabhängig vom Material des Schwerts 7 kann das Schwert 7 hierbei nicht nur in der Ebene des Faltenpacks 2 ausgebildet sein, sondern kann schräg zu dieser verlaufen. Hierdurch kann z. B. auch eine Dichtungskonfiguration realisiert werden, bei der die seitliche Abdichtung auf den beiden Seiten des Filterelements mit den Dichtungen 5 auf unterschiedlicher Höhe des Faltenpacks 2 verläuft. Besonders geschickt ist diese Variante, wenn für das Schwert 7 das Material der Dichtungen 5 verwendet werden kann, d.h. ein Schaumstoff. Die Variante in Figur 3 kann ein zusätzliches Kunststoffteil 9 umfassen, das zur seitlichen Abdichtung beitragen kann und als Träger für das Schwert dienen kann.

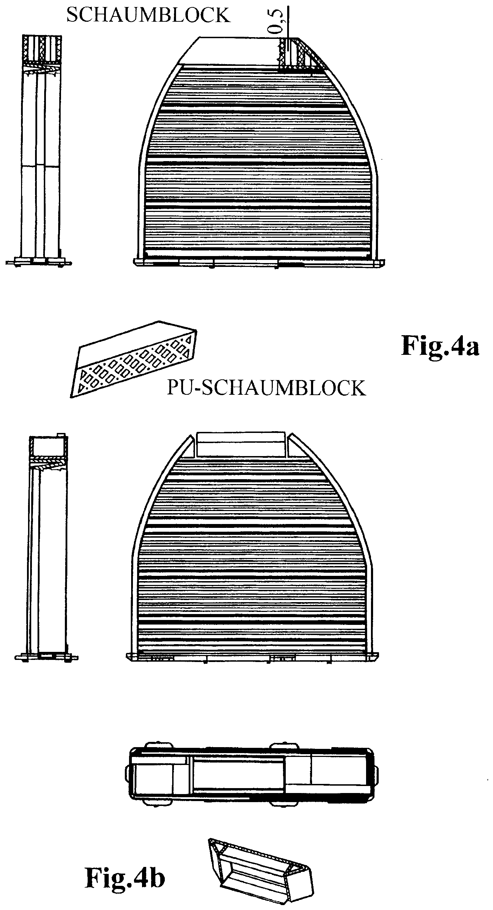

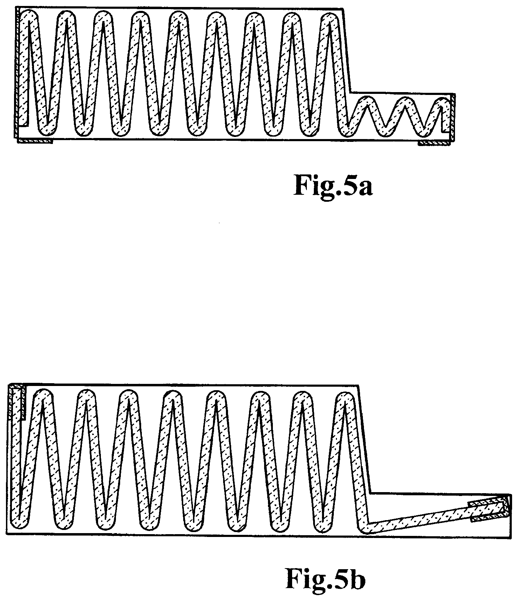

Figur 4 a) und b) sowie Figur 5 a) und b) zeigen alternative Gestaltungsformen eines Filterelements 1 für einen Innenraumfilter, die eine einfache Anpassung an Geometrien einer Filterelementaufnahme ermöglichen.

In Figur 4 a) ist eine Variante dargestellt, bei der ein Schaumstoffblock mit Schwächungszonen eine Aufnahme von unebenen Bereichen der Filterelementaufnahme ermöglicht. Der Schaumstoffblock kann z. B. eine Vielzahl von in Filterelementebene liegenden Schaumstoffprismen umfassen oder eine Vielzahl von Vertiefungen oder Einschnitten.

Figur 4 b) zeigt ein Kunststoffendstück, das mit zwei Schwertern oder Lippen, möglicherweise auch unterschiedlicher Geometrie eine Anpassbarkeit an eine Filterelementaufnahme ermöglicht.

Figuren 5 a) und b) zeigen Varianten für ein Filterelement, bei denen das Filtermedium in Einschub- oder Verschiebungsrichtung derart geformt ist, dass es eine Anpassung an eine Filterelementaufnahme ermöglicht. Z. B. kann das Filtermedium mit einer gegenüber einem größeren Bereich des Filterelements verringerten Faltenhöhe ausgestattet sein, sodass hierdurch eine Anpassbarkeit an eine Filterelementaufnahme gegeben ist. Der Bereich verringerter Faltenhöhe kann dabei nicht nur, wie in Fig. 5 a) gezeigt, mit einer Faltenspitzenebene des Filterelements abschließen, sondern kann auch versetzt, z. B. mittig angebracht sein. Das Filtermedium bzw. der Faltenbalg kann im Bereich geringerer Faltenhöhe auf beiden Seiten von Seitenbändern gefasst sein. Der Bereich verringerter Faltenhöhe kann mit einem L-Winkel, wie in Fig. 5 a), oder einem U-Profil, wie in Fig. 5 b), abschließen.

## Patentansprüche

1. Innenraumfilter umfassend eine Filterelementaufnahme und ein Filterelement (1) umfassend einen Faltenpack (2), wobei das Filterelement (1) entlang einer Einschubrichtung in die Filterelementaufnahme eingeschoben werden kann, wobei das Filterelement (1) ein Schwert (7) umfasst, das sich in Einschubrichtung vom Filterelement aus erstreckt, wobei das Schwert (7) eine in der Filterelementebene asymmetrische Form aufweist, und wobei das Schwert an eine asymmetrische Kontur der Filterelementaufnahme angepasst ist und wobei das Schwert (7) aus Schaumstoff gefertigt ist.

2. Innenraumfilter nach Anspruch 1, wobei das Filterelement (1) Seitenbänder (4) umfasst, die den Faltenpack (2) auf mindestens zwei Seiten abschließen.

3. Innenraumfilter nach Anspruch 1, wobei das Filterelement (1) einen kunststoffumspritzten Faltenpack (2) umfasst, wobei durch das Umspritzen ein Kunststoffrahmen gebildet wird.

4. Innenraumfilter nach einem der vorherigen Ansprüche, wobei das Schwert (7) geneigt zur Ebene des Faltenpacks (2) ist.

5. Innenraumfilter nach einem der vorherigen Ansprüche, wobei die Filterelementaufnahme sich in das Innere der Filterelementaufnahme erstreckende Leit- oder Störstrukturen umfasst.

6. Innenraumfilter nach Anspruch 5, wobei die Leit- oder Störstrukturen Zapfen sind.

7. Verwendung eines Filterelements (1) in einem Innenraumfilter nach einem der vorhergehenden Ansprüche, wobei das Filterelement (1) ein Faltenpack (2) umfasst, und wobei das Filterelement (1) entlang einer Einschubrichtung in eine Filterelementaufnahme des Innenraumfilters eingeschoben werden kann, wobei das Filterelement (1) ein Schwert (7) umfasst, das sich in Einschubrichtung vom Filterelement aus erstreckt, wobei das Schwert (7) eine in der Filterelementebene asymmetrische Form aufweist, und wobei das Schwert an eine asymmetrische Kontur der Filterelementaufnahme angepasst ist und wobei das Schwert (7) aus Schaumstoff gefertigt ist.

## Claims

1. Cabin filter comprising a filter element receptacle and a filter element (1) comprising a pleated pack (2), wherein the filter element (1) can be inserted into the filter element receptacle along an insertion direction, wherein the filter element (1) comprises a blade (7) which extends in insertion direction from the filter element, wherein the blade (7) features an asymmetrical shape in the filter element plane, and wherein the blade is adapted to an asymmetrical contour of the filter element receptacle and wherein the blade (7) is made of foam.

2. Cabin filter according to claim 1, wherein the filter element (1) comprises lateral strips (4) which closes the pleated pack (2) on at least two sides.

3. Cabin filter according to claim 1, wherein the filter element (1) comprises a plastic overmolded pleated pack (2), wherein a plastic frame is formed by the overmolding.

4. Cabin filter according to one of the preceding claims, wherein the blade (7) is inclined with regard to the plane of the pleated pack (2).

5. Cabin filter according to one of the preceding claims, wherein the filter element receptacle comprises guiding- and perturbing-structures extending into the interior of the filter element receptacle.

6. Cabin filter according to claim 5, wherein the guiding- and perturbing-structures are pins.

7. Use of a filter element (1) in a cabin filter according to one of the preceding claims, wherein the filter element (1) comprises a pleated pack (2), and wherein the filter element (1) can be inserted into a filter element receptacle along an insertion direction of the cabin filter, wherein the filter element (1) comprises a blade (7) which extends in insertion direction from the filter element, wherein the blade (7) features an asymmetrical shape in the filter element plane, and wherein the blade is adapted to an asymmetrical contour of the filter element receptacle and wherein the blade (7) is made of foam.

## Revendications

1. Filtre d'habitacle comprenant un logement pour élément filtrant et un élément filtrant (1) comprenant un ensemble de plis (2), dans lequel l'élément filtrant (1) peut être inséré dans le logement pour élément filtrant tout le long d'un sens d'insertion, dans lequel l'élément filtrant (1) comprend une lame (7) s'étendant dans le sens d'insertion depuis l'élément filtrant, dans lequel la lame (7) présente une forme asymétrique dans le plan d'élément filtrant, et dans lequel la lame est adaptée à un contour asymétrique du logement pour élément filtrant et dans lequel la lame (7) est en matière de mousse.

2. Filtre d'habitacle selon la revendication 1, dans lequel l'élément filtrant (1) comprend des bandes latérales (4) qui ferment l'ensemble de plis (2) sur au moins deux côtés.

3. Filtre d'habitacle selon la revendication 1, dans lequel l'élément filtrant (1) comprend un ensemble de plis (2) surmoulé de plastique, un cadre en matière plastique étant formé par le surmoulage.

4. Filtre d'habitacle selon l'une des revendications précédentes, dans lequel la lame (7) est inclinée par rapport au plan de l'ensemble de plis (2).

5. Filtre d'habitacle selon l'une des revendications précédentes, dans lequel le logement pour élément filtrant comprend des structures de guidage ou de perturbation s'étendant à l'intérieur du logement pour élément filtrant.

6. Filtre d'habitacle selon la revendication 5, le structures de guidage ou de perturbation étant des tiges.

7. Utilisation d'un élément filtrant (1) dans un filtre d'habitacle selon l'une des revendications précédentes, dans lequel l'élément filtrant (1) comprend un ensemble de plis (2), et dans lequel l'élément filtrant (1) peut être inséré dans un logement pour élément filtrant d'un filtre d'habitacle tout le long d'un sens d'insertion, dans lequel l'élément filtrant (1) comprend une lame (7) qui s'étend dans le sens d'insertion depuis l'élément filtrant, dans lequel la lame (7) présente une forme asymétrique dans le plan d'élément filtrant, et dans lequel la lame est adaptée à un contour asymétrique du logement pour élément filtrant et dans lequel la lame (7) est en matière de mousse.
